# FASCICULE DE BREVET EUROPEEN

(11) **EP 3 192 013 B1**
(45) Date de publication et mention de la délivrance du brevet: **12.02.2020**
(21) Numéro de dépôt: 15771682.0
(22) Date de dépôt: 10.09.2015
(51) Int. Cl.: G06K 19/077, G06K 19/07

(54) **DISPOSITIF ÉLECTRONIQUE COMPORTANT UN COMPOSANT ÉLECTRONIQUE PRÉSENTANT UNE ZONE D'AFFICHAGE ET PROCÉDÉ DE FABRICATION D'UN TEL DISPOSITIF**
ELEKTRONISCHE VORRICHTUNG MIT EINER ELEKTRONISCHEN KOMPONENTE MIT EINEM ANZEIGEBEREICH UND VERFAHREN ZUR HERSTELLUNG SOLCH EINER VORRICHTUNG
ELECTRONIC DEVICE COMPRISING AN ELECTRONIC COMPONENT HAVING A DISPLAY AREA AND METHOD FOR MANUFACTURING SUCH A DEVICE

(30) Priorité: 10.09.2014 FR 1458507
(43) Date de publication de la demande: 19.07.2017
(73) Titulaire: IDEMIA France, 92700 Colombes (FR)
(72) Inventeur: BOSQUET, Olivier, 92700 Colombes (FR); KERHOMEN, Julie, 92700 Colombes (FR)
(74) Mandataire: Cabinet Beau de Loménie
(86) Numéro de dépôt international: PCT/FR2015/052421
(87) Numéro de publication internationale: WO 2016/038313

(56) Documents cités:
- EP-A1- 2 650 827
- WO-A1-2006/046214
- WO-A2-2008/015676
- DE-A1- 19 604 374
- FR-A1- 2 919 945
- US-A1- 2011 074 001

## Description

La présente invention concerne les dispositifs électroniques et plus particulièrement les cartes à microprocesseur, appelées aussi cartes à puces.

Plus particulièrement, l'invention concerne un dispositif électronique comportant, un microprocesseur, un corps délimité par deux faces opposées, une batterie disposée dans le corps de carte, un composant électronique relié électriquement au microprocesseur et à la batterie adaptée à alimenter le composant électronique.

Une carte à puce comprend généralement un corps de carte comportant un microprocesseur (ou puce électronique) apte à traiter des signaux et à réaliser diverses fonctions selon l'utilisation à laquelle la carte est destinée. La carte à microprocesseur peut être du type « sans contact », c'est à dire adaptée à communiquer à distance avec un lecteur externe au moyen d'une antenne reliée au microprocesseur, ou encore du type « à contact » au moyen de plages de contact reliées électriquement au microprocesseur et qui sont ménagées à la surface du corps de carte de façon à être accessibles par un dispositif de lecture externe. Certaines cartes cumulent les deux modes de communication.

L'utilisation des cartes à puce est aujourd'hui largement répandue dans la vie courante. De telles cartes sont par exemple utilisées comme cartes bancaires, cartes de fidélité, cartes d'accès, cartes pour téléphones portables, cartes M2M (pour « machine to machine »), etc. et peuvent prendre divers formats selon leur utilisation respective.

La présente invention concerne particulièrement les cartes à microprocesseur de format ID-1, c'est-à-dire de format d'une carte bancaire tel que spécifié dans les normes ISO 7810.

Les standards ISO/IEC 7810 et ISO/IEC 7816 imposent que les dimensions des cartes à puce restent conformes à une tolérance près aux dimensions prévues par cette norme pour le format considéré. Il est important que les écarts dimensionnels et les possibles déviations en courbure de la carte vis-à-vis du format standard restent limités y compris lorsque la carte est exposée à un certain niveau de contraintes mécaniques et thermiques.

Ainsi une carte de format ID-1 présente les dimensions suivantes : 85,60mm^{∗}53,98mm^{∗}0,76mm.

Il est apparu nécessaire de perfectionner ces cartes, afin d'offrir de nouvelles fonctionnalités de services et de sécurité à l'utilisateur. Une solution connue est d'ajouter de nouveaux composants électroniques dans la carte, tout en respectant les dimensions de la carte et notamment la contrainte d'une épaisseur de 0,76mm.

Il est notamment connu du document FR 2 919 945 d'intégrer un composant électronique, tel qu'un écran d'affichage dans l'épaisseur de la carte. A cet effet, l'écran possède une surface d'affichage entourée d'une périphérie technique. L'écran est disposé à l'intérieur du corps de carte et est recouvert d'une couche transparente. La couche transparente fait partie intégrante du corps de carte et est laminée avec les autres couches après insertion de l'afficheur.

Cette solution présente l'inconvénient de positionner l'écran dans le corps de carte avant sa fabrication et donc de faire subir au composant électronique une étape de lamination à chaud pouvant endommager sérieusement le composant qui n'est pas prévu pour résister à des températures et des pressions aussi élevées. De plus, la couche transparente rend visible la périphérie technique de l'écran, ce qui ne correspond pas forcément aux critères esthétiques souhaités par le fournisseur de carte. Par ailleurs, la réalisation d'une impression sur la face interne de la couche transparente est une opération complexe à réaliser, notamment à cause de la difficulté d'obtention de l'opacité de l'impression pour obtenir les effets visuels souhaités.

Il est aussi connu du document EP 2 426 627 d'intégrer une LED sur un module ajouté après la réalisation du corps de carte. Toutefois la solution décrite dans ce document impose d'intégrer le moyen d'alimentation de la LED sur le module. En effet, la source d'alimentation décrite dans ce document est formée par une antenne directement déposée sur le module.

Le document DE 196 04 374 décrit une carte à puce comprenant une zone d'affichage. Le document EP 2 650 827 décrit une carte avec un composant électronique intégré. Le document WO 2006/046214 décrit un dispositif incorporant un affichage.

La présente invention propose une solution pour intégrer un composant électronique dans une carte de format spécifié par les normes ISO, hors du corps de carte, et accessible visuellement de manière singulière.

A cet effet l'invention propose un dispositif électronique selon la revendication 1.

Grâce à ces dispositions, il est possible d'incorporer le composant dans la carte sans le noyer dans le corps de carte, et de réaliser de manière simple une fenêtre d'accès visuel audit composant.

Selon d'autres caractéristiques
- la zone d'affichage est constituée d'un écran ;
- le motif imprimé est réalisé dans la continuité d'un motif visible sur la première face, de sorte à minimiser les variations de couleur à la jonction entre le module et le corps ;
- le motif imprimé sur le premier module est choisi pour réaliser un effet de contraste avec les couleurs de la zone d'affichage ;
- le substrat présente un contour et le motif imprimé présente des dimensions sensiblement égales au contour du substrat ;
- le substrat présente un contour et le motif imprimé présente des dimensions légèrement supérieures au contour du substrat ;

L'invention concerne aussi un procédé de fabrication selon la revendication 7.

L'invention sera mieux comprise à la lecture de la description détaillée qui suit faite en référence aux figures annexées selon lesquelles :
- Les figures 1a et 1b représentent une vue de face en transparence d'une carte de format ID-1 comportant un module selon un premier exemple utile à la compréhension de l'invention,
- La figure 2 représente une vue en coupe selon II-II de la carte selon le premier exemple,
- La figure 3 représente une vue de face d'une carte selon un deuxième exemple utile à la compréhension de l'invention,
- La figure 4 représente une vue de face du module selon le deuxième exemple ;
- La figure 5 représente une variante de réalisation d'un premier module selon l'invention.

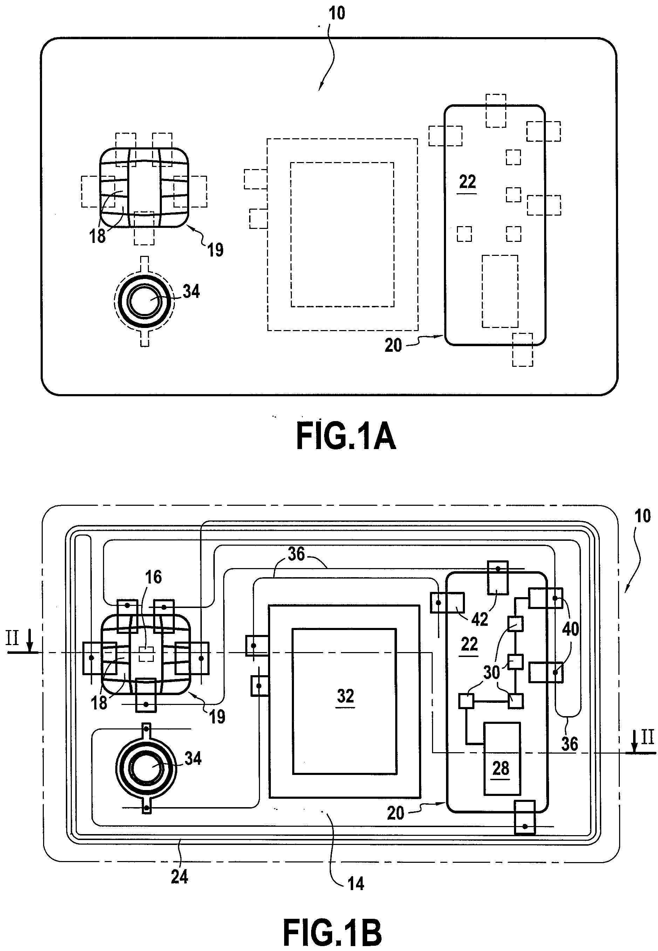

Les figures 1a et 1b représentent schématiquement un premier exemple de dispositif électronique, tel qu'une carte 10 munie d'un afficheur 12. La carte 10 présente le format d'une carte 10 bancaire spécifié dans les normes ISO 7810, 7816. La carte 10 comporte un corps 14 en plastique, par exemple réalisé en PVC, PET ou polycarbonate. Il existe aujourd'hui plusieurs méthodes de fabrication de ces cartes. Une première méthode consiste à assembler plusieurs couches en plastique très minces les unes avec les autres par un procédé de lamination à chaud. Cette méthode permet de fusionner les différentes couches entre elles à une température très élevée, par exemple 150°C à 200°C pendant 10 à 20 minutes à une pression de 20 à 25 bars. L'étape de lamination permet de faire fluer le plastique dans tous les interstices de sorte à former un corps en plastique compact, rempli de matière plastique. Le corps est délimité au moins par une première et une deuxième face opposées et des bords latéraux (tranches). Après lamination, il est quasiment impossible de distinguer et de séparer les différentes couches, de sorte que l'ensemble des couches ne forme qu'une seule aux yeux de l'utilisateur. Il est aussi connu de réaliser le corps 14 de carte 10 par un procédé de moulage, dans lequel le plastique est amené à une température très élevée correspondant à son point de fusion.

Les cartes comportent un microprocesseur 16 permettant de gérer des informations reçues d'un terminal extérieur. A cet effet la carte 10 comporte aussi une interface de communication pour échanger les informations avec le terminal extérieur. Cette interface est par exemple un module 19 comportant un substrat 17 (ou vignette) sur lequel sont gravées ou imprimées des plages 18 ou zones en cuivre. Ces plages 18 sont destinées à être mises en contact avec des pins ou broches d'un lecteur extérieur. La carte 10 est alors appelée carte 10 à contacts. D'autres moyens de communication permettent des échanges de signaux sans contacts direct avec le terminal. Ces moyens comportent une antenne 24 incrustée dans le corps 14 de carte 10 et paramétrée pour communiquer avec le terminal à une fréquence de 13,56MHz déterminée dans les normes ISO 14443. Les cartes peuvent comporter une seule interface de communication, avec contact, ou bien avec et sans contact.

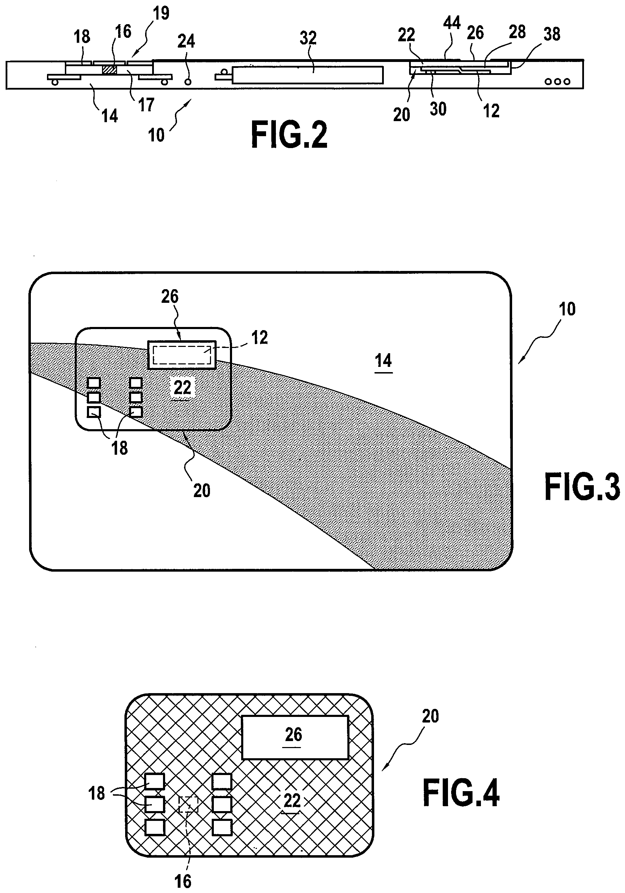

La présente invention porte sur l'intégration d'un composant électronique dont au moins une partie doit être accessible visuellement par l'utilisateur, de sorte à offrir une nouvelle fonctionnalité à l'utilisateur. Dans la suite de la description, le composant électronique pris en exemple pour décrire l'invention est un afficheur 12. Comme illustré sur les figures 1a, 1b et 2 du premier exemple, l'afficheur 12 comporte une zone d'affichage d'informations formée d'un écran 28 adapté à afficher des informations destinées à être lues par l'utilisateur. Ces informations sont, par exemple, des chiffres formant un code de sécurité pour garantir qu'il ne s'agit pas d'une utilisation frauduleuse de la carte 10. L'afficheur 12 est relié au microprocesseur 16 pour générer, à tout moment, un nouveau code de sécurité, lié à la carte 10 et notamment aux douze chiffres d'identification de la carte 10. Ce code est généré par le microprocesseur 16. Le microprocesseur 16 est initialisé pour générer un nouveau code à une fréquence donnée et qui peut être vérifié par un terminal distant.

L'afficheur 12 comporte en outre des éléments périphériques 30 dédiés à la connexion électrique avec le microprocesseur 16 et à la connexion avec une source d'alimentation, telle qu'une batterie 32 noyée dans le corps de carte, et éventuellement un interrupteur 34 ou bouton intégré dans le corps 14 de carte 10. Les composants noyés dans le corps 14 de carte sont incorporés dans celui-ci lors de l'étape de lamination à chaud formant le corps de carte

L'écran 28 et les éléments périphériques 30 de l'afficheur 12 ne sont pas tous adaptées pour résister aux contraintes de température de lamination. L'intégration de l'afficheur 12 dans le corps 14 de carte 10 suivi d'une étape de lamination ou de moulage pourrait entraîner des dommages irréversibles au composant électronique, et un fort taux de dysfonctionnement.

Il a donc été trouvé comme solution d'intégrer l'afficheur 12 dans la carte 10 après l'étape de fabrication du corps 14 de carte 10. Toutefois l'intégration de l'afficheur 12 dans la carte 10 doit respecter les dimensions de la carte, notamment son épaisseur, imposées par les normes énoncées ci-dessus.

A cet effet une cavité 38 débouchante sur une face, recto ou verso, de la carte est réalisée dans la carte 10 et le composant électronique y est agencé. La cavité 38 est délimitée par le corps 14 et est réalisée par des moyens connus de l'homme du métier, tel qu'une fraise d'usinage ou par un moule adapté lors de l'étape de moulage. La profondeur de la cavité 38 est déterminée selon l'épaisseur du composant électrique à accueillir et comporte avantageusement un épaulement.

La cavité 38 adaptée à accueillir l'afficheur 12 est recouverte par le module 20 d'afficheur monté affleurant à une face externe du corps 14 de carte 10 et en appui sur l'épaulement de la cavité 38. Le substrat 22 du module 20 est réalisé en matière transparente et est recouvert d'un motif délimitant une fenêtre 26 d'accès visuel au droit de l'écran 28 de l'afficheur 12.

Le composant électronique est directement fixé au fond de la cavité 38. La fixation de l'afficheur 12 sur le fond du la cavité 38 est réalisée par des moyens qui seront décrits plus en détails dans la suite de la description.

Comme cela est illustré en figures 1 et 2 annexées, l'afficheur 12 est connecté électriquement au microprocesseur 16 et à la batterie 32 incorporée dans la matière plastique formant le corps de carte par l'intermédiaire de la partie électronique périphérique 30 qui sera masquée dans la carte 10. Cette partie périphérique permet de redresser, c'est-à-dire booster, la tension de la batterie 32 noyée dans le corps de carte qui est de 3,3V en général alors que les technologies d'affichage nécessitent une tension de 20V, et des moyens pour contrôler l'affichage des informations digitales. Les connexions entre la partie périphérique de l'afficheur 12 et le microcontrôleur de la carte 10 sont réalisées par un ensemble de pistes d'interconnexion 36 réalisées sur une couche interne. Les connexions entre la partie périphérique de l'afficheur 12 et la batterie 32 sont réalisées par un ensemble de pistes 36 d'interconnexion réalisées dans une couche interne de la carte 10.

Ces pistes d'interconnexion 36 sont réalisées par des procédés additifs, c'est-à-dire d'ajout de matière conductrice sur la couche interne. Cela peut être des fils de cuivre incrustés dans la couche interne ou des pistes de métal sérigraphiées sur la couche interne. Chaque extrémité de fil est connectée à une plaque de Cuivre 42, ou des plots métalliques, ajoutée dans la couche interne et l'usinage permet de faire déboucher ces plaques 42 dans le fond de la cavité 38. Des plaques de cuivre sont fixées sur les éléments périphériques 30, de sorte à venir en vis à vis des plaques 42 disposées au fond de la cavité 38. Un point de soudure 40 est réalisé entre les plaques 42 disposées en vis-à-vis. Les points de soudure 40 assurent ainsi un point de connexion mécanique pour accrocher l'afficheur 12 et un point de connexion électrique pour le passage des signaux. La soudure peut être du type à ultrason ou bien une soudure classique avec de la pâte à braser et une pointe chaude d'un fer à souder.

Selon une variante de réalisation les pistes d'interconnexion sont réalisées par un procédé soustractif de gravure de métal de type circuit imprimé sur la couche interne, qui sera ensuite incorporée dans le corps de carte. L'usinage venant mettre à découvert les extrémités des pistes d'interconnexion dans la cavité 38.

La carte 10 comporte en outre un interrupteur 34 sous forme de bouton sur la couche interne disposée entre la batterie 32 et l'afficheur 12. Grâce à ces dispositions, l'utilisateur active l'affichage de l'information sur l'écran 28 uniquement lorsqu'il en a besoin. Cela évite donc une dépense inutile d'énergie de la batterie 32.

Le module 20 dédié à fermer la cavité 38 et à recouvrir l'afficheur 12 est constitué d'un substrat 22 en plastique transparent de faible épaisseur (75 à 100µm d'épaisseur). De préférence, le substrat 22 est réalisé en PET transparent. Le module 20 permet de protéger l'écran 28 de l'environnement extérieur, et ainsi éviter l'endommagement de celui-ci.

Afin de masquer les parties électroniques périphériques 30 de l'afficheur 12 et d'autres composants électroniques présents dans la cavité 38, le substrat 22 du module 20 est recouvert d'une couche d'impression 44. L'impression définit une fenêtre 26 transparente au droit de l'écran 28 d'affichage. La fenêtre 26 délimite ainsi une zone d'accès visuel à l'écran 28.

L'impression est réalisée par des techniques connues de l'homme du métier, telles que la sérigraphie, la tampographie, l'offset, le transfert thermique ou le jet d'encre. Cette dernière technique est plutôt envisagée dans le cadre de la présente invention car elle présente l'avantage d'être rapide et précise, de plus elle permet l'impression de visuels multicolores et peut éventuellement être protégée par un vernis.

L'impression est réalisée de préférence sur la face interne du substrat 22, avant l'étape de fixation des composants électroniques. Cette disposition permet de protéger le masque d'impression des sollicitations externes, telles que les marques de pressage lors de l'encartage ou des rayures de frottement. Selon une variante de réalisation, l'impression est réalisée sur la face externe du substrat 22 du module 20. Dans ce dernier cas, le masque peut être imprimé après l'étape d'encartage, et peut alors personnaliser le module 20 de la carte 10. Afin de garantir l'opacité du module 20 l'impression peut être réalisée sur les deux faces du substrat 22. Toutefois, cette dernière disposition nécessite une grande précision pour disposer les masques d'impression de la face interne et de la face externe en regard l'un de l'autre pour éviter un décalage des contours délimitant la fenêtre 26 d'accès visuel à l'écran 28 d'affichage.

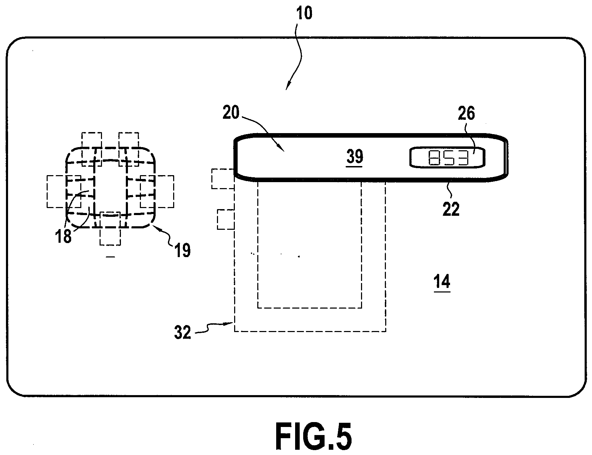

Comme indiqué ci-dessus, l'étape d'impression peut être réalisée par transfert thermique. Ces dispositions s'appliquent de manière avantageuse pour le dépôt d'un panneau de signature 39 d'une carte de paiement visible sur la figure 5. Le panneau de signature 39 comporte une fenêtre permettant un accès visuel à l'écran d'affichage.

Le panneau de signature est habituellement utilisé pour recevoir la signature manuscrite du titulaire de la carte. Il est utilisé pour rendre l'écriture sur la carte plus facile avec n'importe quel type de crayon. Il peut être aussi utilisé pour recevoir d'autres types d'informations écrites, ultérieurement au procédé de fabrication. Le panneau de signature comporte, par exemple, un fond réalisé à partir d'une encre monocouleur et sur lequel sont éventuellement imprimées des inscriptions relatives aux organismes certificateurs délivrant la carte de paiement.

Le panneau de signature présente des dimensions et est positionné selon les exigences de chacun des organismes certificateurs de paiement lorsque la carte est conforme à cette norme. A titre d'exemple, le panneau présente les dimensions minimum de 8mm 40mm, disposé à une distance de 25mm du bord droit de la carte et du bord inférieur de la carte. Ces dimensions sont données à titre indicatif, et peuvent varier selon les normes imposées par les organismes certificateurs. Les dimensions externes du substrat transparent recevant le panneau peuvent être sensiblement égales à celles du panneau.

Le panneau de signature 39 forme le motif à imprimer. Il est déposé par une technique de transfert thermique permettant de transférer l'encre, préalablement déposée sur un support en bande, sur le substrat transparent du module au moyen d'une tête chauffante. La tête chauffante présente une empreinte correspondant à la forme souhaitée du motif. Pour réaliser une zone dépourvue de matière au droit de l'écran, la tête chauffante présente un creux empêchant le transfert de l'encre. La fenêtre présente donc les dimensions du creux de l'empreinte de la tête chauffante.

Selon une variante de réalisation, le motif, par exemple le panneau de signature 39, est réalisé par sérigraphie sur le substrat.

Quelles que soient la technique d'impression, la réalisation du motif, tel qu'un panneau de signature 39, peut être effectuée avant l'encartage du substrat. Dans ce cas, le motif peut, dans un mode de réalisation, présenter un contour au plus égal à celui du substrat.

La réalisation du motif du panneau de signature 39 peut être réalisée après l'encartage du substrat. Dans ce cas, le motif peut, dans un mode de réalisation, présenter un contour égal ou supérieur à celui du substrat.

L'impression réalisée sur le substrat 22 représente un motif réalisé dans la continuité du motif imprimée sur le corps 14 de carte 10, comme cela est visible sur la figure 1. Le motif du substrat 22 s'accorde avec le motif visuel de la carte 10 pour limiter les transitions visuelle parfois inesthétiques.

Selon un autre mode de réalisation, l'impression est réalisée pour former un contraste avec l'écran 28 d'affichage afin de le mettre en évidence. On entend par contraste, le phénomène optique permettant de renforcer l'opposition entre deux couleurs juxtaposées, comme cela est connu dans le cercle chromatique. Ainsi si l'écran 28 présente un fond ou un affichage de couleur jaune, il sera recommandé de réaliser un masque avec une couleur bleue.

Les figures 3 et 4 représentent une carte 10 selon un deuxième exemple, dans lequel la carte 10 comporte un seul module 20 comprenant le microprocesseur 16 et recouvrant la cavité 38 recevant l'afficheur 12. Dans ce second exemple les éléments identiques au premier exemple portent des signes de références identiques. Le module 20 comporte une fenêtre 26 et comporte en outre les contacts ISO 18 et le microprocesseur 16. La carte comporte, de manière similaire au premier exemple, des composants électroniques (non représentés) intégrés dans le corps 14 de carte ou encore recouverts par le module 22. Les connexions électriques entre les composants de la carte selon le deuxième exemple est identique à celui décrit pour le premier exemple.

L'invention porte aussi sur un procédé de fabrication d'une carte telle qu'illustrée dans la figure 5. Ce procédé réunit deux techniques d'intégration de composant, par encartage et par lamination à haute température, et des moyens de les connecter.

A cet effet le procédé comporte les étapes suivantes.

Tout d'abord, une étape d'assemblage de couches en plastique est réalisée. Une couche interne du corps 14 comprend un substrat sur lequel est montée une batterie 32 et des pistes 36 d'interconnexion reliées d'une part à la batterie 32. Les couches sont assemblées entre elles par lamination à haute température et sous pression. Ensuite, le procédé consiste à usiner la cavité 38 dans l'assemblage obtenu pour former le corps 14 de carte. Selon une autre méthode, le corps et la cavité sont directement formés par moulage. La cavité est adaptée à recevoir l'afficheur qui présente un écran. Au moins une piste d'interconnexion débouche dans la cavité 38 pour connecter électriquement l'afficheur à la batterie. Ensuite l'afficheur 12 est mis en place dans la cavité et connecté électriquement à la batterie. L'afficheur est monté de sorte que l'écran soit orienté vers l'ouverture de la cavité 38.

Le module 20 est ensuite positionné affleurant à la première face du corps 14 et assemblé par application d'un chauffage de 150°C minimum et d'une pression de deux bars minimum sur ledit substrat 22 le premier module 20 étant positionné affleurant à la première face du corps 14.

Puis, le module est imprimé de sorte à réaliser un motif délimitant une fenêtre 26 d'accès visuel au droit de l'écran 28 d'afficheur positionné dans la cavité 38. A cet effet, l'impression est réalisée après l'étape d'encartage, sur la face externe du module 20 ce qui permet de personnaliser le module et de la relier à la carte à laquelle il est rattaché.

L'impression peut aussi être réalisée de manière standard avant l'étape d'encartage du module, sur une ou sur les deux faces du substrat du module.

L'invention concerne un dispositif électronique, et plus particulièrement une carte, obtenu par le procédé décrit ci-dessus et présentant les caractéristiques telles que décrites précédemment dans la description.

## Revendications

1. Dispositif électronique (10) comportant:
- Un microprocesseur (16),
- Un corps (14) délimité au moins par une première et une deuxième faces opposées,
- Une batterie (32) disposée à l'intérieur du corps (14),
- Un composant électronique (12) relié électriquement au microprocesseur (16) et à la batterie (32),
le dispositif électronique présentant au moins une première cavité (38) comportant une ouverture débouchant sur une des faces du corps (14) et dans laquelle le composant électronique est fixé au fond de la première cavité (38), le composant électronique comportant une zone d'affichage d'information orientée vers l'ouverture de la première cavité (38), le dispositif comportant en outre au moins un premier module (20) comportant un substrat (22) adapté à recouvrir la première cavité (38) de sorte à affleurer la première face du corps (14), le substrat (22) du premier module (20) étant réalisé en matière transparente et recouvert d'un motif imprimé délimitant une fenêtre (26) d'accès visuel au droit de la zone d'affichage du composant électronique,
le corps (14) comportant une deuxième cavité et un deuxième module (19) affleurant la face du corps (14), le deuxième module (19) comportant le microprocesseur (16),
ledit dispositif étant **caractérisé en ce que** le deuxième module (19) comporte des zones de contact (18) adaptées à coopérer avec un terminal externe, **en ce que** le dispositif est une carte à puce de format conforme aux normes ISO7810 et ISO7816, **en ce que** le premier module (20) est disposé sur la première face et le deuxième module (19) est disposé sur la deuxième face opposée, et **en ce que** le motif imprimé forme un panneau de signature (39).

2. Dispositif selon la revendication 1, dans lequel la zone d'affichage est constituée d'un écran (28).

3. Dispositif selon l'une des revendications précédentes, dans lequel le motif imprimé est réalisé dans la continuité d'un motif visible sur la première face du dispositif, de sorte à minimiser les variations de couleur à la jonction entre le module (20) et le corps (14).

4. Dispositif selon l'une des revendications précédentes, dans lequel le motif imprimé sur le premier module (20) est choisi pour réaliser un effet de contraste avec les couleurs de la zone d'affichage du composant électronique.

5. Dispositif selon la revendication 1 ou 2, dans lequel le substrat présente un contour, et le motif imprimé présente des dimensions sensiblement égales au contour du substrat.

6. Dispositif selon la revendication 1 ou 2 dans lequel le substrat présente un contour et le motif imprimé présente des dimensions légèrement supérieures au contour du substrat.

7. Procédé de fabrication d'un dispositif selon l'une des revendications précédentes, **caractérisé en ce qu'**il comporte les étapes suivantes :
- réalisation d'un corps (14) délimité par au moins une première et une deuxième faces opposées, le corps (14) comportant une batterie (32) disposée à l'intérieur du corps et des pistes (36) d'interconnexion reliées d'une part à la batterie (32),
- réalisation d'une première cavité (38) débouchant sur une face du corps, au moins une piste d'interconnexion débouchant dans la première cavité (38),
- puis agencement du composant électronique (12) dans la première cavité, le composant électronique comportant une zone d'affichage orientée vers l'ouverture de la première cavité (38),et connexion électrique du composant électronique aux pistes d'interconnexion débouchant dans la première cavité,
- positionnement d'un premier module (20), comportant un substrat (22) transparent, affleurant à la première face du corps (14),
- assemblage du premier module (20) par application d'un chauffage et d'une pression sur ledit substrat (22),
- le procédé comportant une étape d'impression, sur le substrat, d'un motif délimitant une fenêtre (26) d'accès visuel au droit de la zone d'affichage du composant électronique,
ledit procédé comportant la réalisation, dans le corps (14) d'une deuxième cavité, le corps étant conçu pour comporter un deuxième module (19) affleurant la face du corps (14), le deuxième module (19) comportant le microprocesseur (16) et des zones de contact (18) adaptées à coopérer avec un terminal externe, et **en ce que** le dispositif est une carte à puce de format conforme aux normes ISO7810 et ISO7816, le premier module (20) étant disposé sur la première face et le deuxième module étant disposé sur la deuxième face opposée, et le motif imprimé formant un panneau de signature (39).

8. Procédé de fabrication selon la revendication précédente, dans lequel Le corps (14) est fabriqué par lamination à chaud à une température égale ou supérieure à 150°C de plusieurs couches, dont au moins une comporte la batterie (32) et les pistes d'interconnexion.

9. Procédé de fabrication selon l'une des revendications 7 à 8, dans lequel la première cavité est réalisée par usinage.

10. Procédé de fabrication selon l'une des revendications 7 à 9, dans lequel l'impression du motif délimitant la fenêtre (26) d'accès visuel est réalisée par jet d'encre.

11. Procédé de fabrication selon l'une des revendications 7 à 9, dans lequel l'étape d'impression est réalisée par sérigraphie.

12. Procédé de fabrication selon l'une des revendications 7 à 9, dans lequel l'étape d'impression est réalisée par transfert thermique.

13. Procédé de fabrication d'un dispositif selon l'une des revendications 7 à 12, dans lequel le dispositif est une carte à microcircuit et l'impression du motif est réalisé après l'étape d'assemblage du premier module (20).

## Patentansprüche

1. Elektronische Vorrichtung (10), umfassend:
- einen Mikroprozessor (16),
- einen Körper (14), der mindestens durch eine erste und eine zweite Seite, die einander gegenüberliegen, begrenzt ist,
- eine Batterie (32), die im Inneren des Körpers (14) angeordnet ist, und
- ein elektronisches Bauelement, das mit dem Mikroprozessor (16) und der Batterie (32) elektrisch verbunden ist,
wobei die elektronische Vorrichtung mindestens einen Hohlraum (38) aufweist, der eine Öffnung aufweist, die auf einer der Seiten des Körpers (14) mündet, und wobei das elektronische Bauelement am Boden des Hohlraums (38) befestigt ist,
wobei das elektronische Bauelement einen Informationsanzeigebereich aufweist, der zur Öffnung des Hohlraums (38) ausgerichtet ist,
wobei das elektronische Bauelement ferner ein erstes Modul (20) aufweist, das ein Substrat (22) aufweist, das geeignet ist, den Hohlraum (38) derart zu bedecken, um mit der ersten Seite des Körpers (14) bündig abzuschließen, wobei das Substrat (22) des Moduls (20) aus durchsichtigem Material hergestellt ist und mit einem gedruckten Muster bedeckt ist, das ein Fenster (26) für den visuellen Zugang zu dem Informationsanzeigebereich des elektronischen Bauelements begrenzt,
wobei der Körper (14) einen zweiten Hohlraum und ein zweites Modul (19) aufweist, das mit der Seite des Körpers (14) bündig abschließt, wobei das zweite Modul (19) den Mikroprozessor (16) aufweist,
wobei die Vorrichtung **dadurch gekennzeichnet ist, dass** das zweite Modul (19) Kontaktbereiche (18) aufweist, die geeignet sind, mit einem externen Endgerät zusammenzuwirken, und dadurch, dass die Vorrichtung eine Chipkarte mit einem Format ist, das den ISO-Normen 7810 und 7816 entspricht, wobei das erste Modul (20) auf der ersten Seite angeordnet ist und das zweite Modul (19) auf der zweiten gegenüberliegenden Seite angeordnet ist, wobei das gedruckte Muster ein Unterschriftsfeld (39) bildet.

2. Vorrichtung nach Anspruch 1, wobei der Anzeigebereich von einem Bildschirm (28) gebildet wird.

3. Vorrichtung nach einem der vorhergehenden Ansprüche, wobei das gedruckte Muster in der Kontinuität eines sichtbaren Musters auf der ersten Seite der Vorrichtung derart erstellt ist, um die Farbabweichungen an der Verbindungsstelle zwischen Modul (20) und Körper (14) zu minimieren.

4. Vorrichtung nach einem der vorhergehenden Ansprüche, wobei das gedruckte Muster auf dem ersten Modul (20) ausgewählt ist, um eine Kontrastwirkung mit den Farben des Anzeigebereichs des elektronischen Bauelements zu erzeugen.

5. Vorrichtung nach Anspruch 1 oder 2, wobei das Substrat eine Kontur aufweist und das gedruckte Muster Abmessungen aufweist, die im Wesentlichen gleich der Kontur des Substrats sind.

6. Vorrichtung nach Anspruch 1 oder 2, wobei das Substrat eine Kontur aufweist und das gedruckte Muster Abmessungen aufweist, die leicht größer als die Kontur des Substrats sind.

7. Verfahren zur Herstellung einer Vorrichtung nach einem der vorhergehenden Ansprüche, **dadurch gekennzeichnet, dass** es die folgenden Schritte aufweist:
- Erstellen eines Körpers (14), der durch mindestens zwei einander gegenüberliegende Seiten begrenzt ist, wobei der Körper (14) eine Batterie (32), die im Inneren des Körpers angeordnet ist, und Verbindungsbahnen (36) aufweist, die auf einer Seite mit der Batterie (32) verbunden sind,
- Erstellen eines Hohlraums (38), der auf einer Seite des Körpers mündet, wobei mindestens eine Verbindungsbahn in den Hohlraum (38) mündet,
- dann Anordnen des elektronischen Bauelements (12) in dem Hohlraum, wobei das elektronische Bauelement einen Informationsanzeigebereich aufweist, der zur Öffnung des Hohlraums (38) ausgerichtet ist, und elektrisches Anschließen des elektronischen Bauelements an die Verbindungsbahnen, die in den Hohlraum münden,
- Anordnen eines ersten Moduls (20), das ein durchsichtiges Substrat (22) aufweist, das mit der ersten Seite des Körpers (14) bündig abschließt, und
- Zusammenbauen des ersten Moduls (20) durch Anwenden von Erhitzung und Ausüben eines Drucks auf das Substrat (22),
- wobei das Verfahren einen Schritt des Druckens eines gedruckten Musters auf das Substrat aufweist, das ein Fenster (26) für den visuelle Zugang zu dem Informationsanzeigebereich des elektronischen Bauelements begrenzt,
wobei das Verfahren das Erstellen eines zweiten Hohlraums in dem Körper (14) aufweist, wobei der Körper ausgebildet wird, um ein zweites Modul (19) aufzuweisen, das mit der Seite des Körpers (14) bündig abschließt, wobei das zweite Modul (19) den Mikroprozessor (16) und Kontaktbereiche (18) aufweist, die geeignet sind, mit einem externen Endgerät zusammenzuwirken, und dadurch, dass die Vorrichtung eine Chipkarte mit einem Format ist, das den ISO-Normen 7810 und 7816 entspricht, wobei das erste Modul (20) auf der ersten Seite angeordnet wird und das zweite Modul auf der zweiten gegenüberliegenden Seite angeordnet wird, wobei das gedruckte Muster ein Unterschriftsfeld (39) bildet.

8. Verfahren zur Herstellung gemäß dem vorhergehenden Anspruch, wobei der Körper (14) durch Heißlaminieren von mehreren Schichten, wovon mindestens eine die Batterie (32) und die Verbindungsbahnen aufweist, bei einer Temperatur gleich oder höher als 150 °C hergestellt wird,

9. Verfahren zur Herstellung gemäß einem der Ansprüche 7 bis 8, wobei der Hohlraum durch Fräsen erstellt wird.

10. Verfahren zur Herstellung gemäß einem der Ansprüche 7 bis 9, wobei das Drucken des Musters, das das Fenster (26) für den visuelle Zugang zum Modul begrenzt, durch Tintenstrahl-Druck erfolgt.

11. Verfahren zur Herstellung gemäß einem der Ansprüche 7 bis 9, wobei der Schritt des Druckens durch Siebdruck durchgeführt wird.

12. Verfahren zur Herstellung gemäß einem der Ansprüche 7 bis 9, wobei der Schritt des Druckens durch Wärmeübertragung durchgeführt wird.

13. Verfahren zur Herstellung einer Vorrichtung gemäß einem der Ansprüche 7 bis 12, wobei die Vorrichtung eine Mikroschaltungskarte ist und das Drucken des Musters nach dem Schritt des Zusammenbauens des ersten Moduls (20) durchgeführt wird.

## Claims

1. An electronic device (10) including:
- A microprocessor (16),
- A body (14) delimited at least by a first and a second opposite face,
- A battery (32) positioned inside the body (14),
- An electronic component (12) electrically connected to the microprocessor (16) and to the battery (32),
the electronic device having at least a first cavity (38) including an opening emerging on one of the faces of the body (14) and in which the electronic component is fastened to the bottom of the first cavity (38), the electronic component including an information display zone oriented toward the opening of the first cavity (38),
the device further including at least one first module (20) including a substrate (22) suitable for covering the first cavity (38) so as to be flush with the first face of the body (14), the substrate (22) of the first module (20) being made from transparent material and covered with a printed pattern delimiting a visual access window (26) in line with the display zone of the electronic component,
the body (14) including a second cavity and a second module (19) flush with the face of the body (14), the second module (19) including the microprocessor (16),
said device being **characterized in that** the second module (19) includes contact zones (18) suitable for cooperating with an external terminal, **in that** the device is a chip card with a format according to standards ISO7810 and ISO7816, **in that** the first module (20) is positioned on the first face and the second module (19) is positioned on the opposite second face, and **in that** the printed pattern forms a signature panel (39).

2. The device according to claim 1, wherein the display zone is made up of a screen (28).

3. The device according to one of the preceding claims, wherein the printed pattern is made in the continuation of a pattern visible on the first face of the device, so as to minimize the color variations at the junction between the module (20) and the body (14).

4. The device according to one of the preceding claims, wherein the pattern printed on the first module (20) is chosen to produce a contrast effect with the colors of the display zone and the electronic component.

5. The device according to claim 1 or 2, wherein the substrate has a contour, and the printed pattern has dimensions substantially equal to the contour of the substrate.

6. The device according to claim 1 or 2, wherein the substrate has a contour and the printed pattern has dimensions slightly larger than the contour of the substrate.

7. A method for manufacturing a device according to one of the preceding claims, **characterized in that** it includes the following steps:
- producing a body (14) delimited by at least a first and a second opposite face, the body (14) including a battery (32) positioned inside the body and interconnect tracks (36) coupled on one side to the battery (32),
- producing a first cavity (38) emerging on one face of the body, at least one interconnect track emerging in the first cavity (38),
- then arranging the electronic component (12) in the first cavity, the electronic component including a display zone oriented toward the opening of the first cavity (38), and electrically connecting the electronic component to the interconnect tracks emerging in the first cavity,
- positioning a first module (20), including a transparent substrate (22), flush with the first face of the body (14),
- assembling the first module (20) by applying heat and pressure on said substrate (22),
- the method including a step for printing, on the substrate, a pattern delimiting a visual access window (26) in line with display zone of the electronic component,
said method including producing, in the body (14), a second cavity,
the body being designed to include a second module (19) flush with the face of the body (14), the second module (19) including the microprocessor (16) and contact zones (18) suitable for cooperating with an external terminal, and **in that** the device is a chip card with a format according to standards ISO7810 and ISO7816, the first module (20) being positioned on the first face and the second module being positioned on the opposite second face, and the printed pattern forming a signature panel (39).

8. The manufacturing method according to the preceding claim, wherein the body (14) is manufactured by hot rolling at a temperature greater than or equal to 150°C of several layers, at least one of which includes the battery (32) and the interconnect tracks.

9. The manufacturing method according to one of claims 7 to 8, wherein the first cavity is made by machining.

10. The manufacturing method according to one of claims 7 to 9, wherein the printing of the pattern delimiting the visual access window (26) is done by inkjet.

11. The manufacturing method according to one of claims 7 to 9, wherein the printing step is done by screenprinting.

12. The manufacturing method according to one of claims 7 to 9, wherein the printing step is done by heat transfer.

13. The method for manufacturing a device according to one of claims 7 to 12, wherein the device is a microcircuit board and the printing of the pattern is done after the step for assembling the first module (20).
